# EUROPEAN PATENT SPECIFICATION

(11) **EP 1 622 168 B1**
(45) Date of publication and mention of the grant of the patent: **22.06.2011**
(21) Application number: 04103634.4
(22) Date of filing: 28.07.2004
(51) Int. Cl.: G21C 1/00, G21C 1/03

(54) **Integral nuclear reactor**
Kernreaktor integrierter Bauart
Réacteur nucléaire du type intégré

(43) Date of publication of application: 01.02.2006
(73) Proprietor: The European Atomic Energy Community (EURATOM), represented by the European Commission, 1049 Brussels (BE)
(72) Inventor: CARLSSON, Johan, 1821 AK, ALKMAAR (NL); WIDER, Hartmut, 1861 JE, BERGEN (NL)
(74) Representative: Office Freylinger

(56) References cited:
- CH-A- 549 854
- FR-A- 1 486 017
- GB-A- 1 098 599
- US-A- 3 331 747
- US-A- 4 057 467
- US-A- 4 713 213
- US-A- 4 725 400
- US-A- 4 789 519

## Description

### Field of the invention

The present invention relates to a nuclear reactor, in particular to a liquid metal-cooled reactor or a molten salt reactor.

### Background of the invention

Nuclear reactors generally comprise a reactor vessel filled with a primary coolant, wherein a core of nuclear fuel is submerged in the primary coolant and arranged in a lower part of the reactor vessel. An inner structure separates the reactor vessel into an up-flow coolant passage and a down-flow coolant passage. Upon operation of the core, with or without the aid of pumps, the primary coolant moves upwards through the up-flow coolant passage to an upper part of the reactor vessel and then downwards through the down-flow coolant passage back to the lower part of the reactor vessel. In such modern pool type designs with a simple flow path, a heat exchanger is arranged in the down-flow coolant passage for transferring heat from the primary coolant to a secondary coolant of lower density and higher pressure. The secondary coolant is then used to drive a turbine and produce electricity.

Safety is a very important issue in nuclear reactors. Although many improvements have been made, there always remains a small risk of a leak in the heat exchanger allowing some of the secondary coolant to mix with the primary coolant. The interaction between the two coolants can lead to problems in the reactor.

Modern reactor designs as described above use liquid metal-cooled or molten salt as primary coolant in a primary cooling circuit and water/steam, CO₂, He or N₂ as secondary coolant in a secondary cooling circuit. A potential accident scenario in such reactors is a leakage of water/steam, CO₂, He or N₂ from the secondary circuit into the molten metal coolant or molten salt of the primary circuit. This situation can appear in the case of a major or minor leak of the heat exchanger. In case of a minor leak, water/steam, CO₂, He or N₂ leaking through the heat exchanger walls will form bubbles and also or slag (in the case of water/steam) in the primary coolant. Due to the lower density relative to the primary coolant, the bubbles and slag will move upwards against the coolant flow and reach a gas plenum arranged in the top end of the reactor vessel, from where they can be removed. Due to the downward coolant flow, however, there is a risk that the bubbles or the slag can be dragged into the core, where they can cause an uncontrolled increase in reactivity. In the case of slag formation, obstructions can occur in parts of the circuit, in particular between the fuel rods in the core. It is clear that, for obvious safety reasons, an uncontrolled increase in reactivity as well as flow obstructions must be minimized, and preferably eliminated.

In order to minimize the above-mentioned problems, double-walled heat exchangers with increased resistance towards corrosion and erosion have been proposed. Safety is increased with such double-walled heat exchangers, but these heat exchangers still have the disadvantage that they are not inherently safe and that they are more expensive than conventional ones. Furthermore, even if the risk of a leak is reduced, there always remains a potential of a leak and the problems associated therewith. Another proposal is to use a low-pressure oil as secondary coolant. But this cannot be used for higher temperatures and it is not totally safe. A further proposal is to use the same coolant as primary coolant and as secondary coolant. This clearly eliminates any risk associated with heat exchanger leakages. However, a third cooling circuit with a further coolant is then necessary, which makes this design more cumbersome and also more expensive.

### Object of the invention

The object of the present invention is to provide an improved nuclear reactor, which is safe even in case of a leak in the heat exchanger. This is achieved by a nuclear reactor as claimed in claim 1.

### General description of the invention

A low-pressure nuclear reactor, in particular a liquid metal-cooled reactor or a molten salt reactor, comprises a reactor vessel and an inner structure arranged therein, the reactor vessel being at least partially filled with a low-pressure primary coolant, the inner structure having an up-flow coolant passage therethrough and being dimensioned and arranged so as to provide a down-flow coolant passage between the reactor vessel and the inner structure. The nuclear reactor further comprises a core of nuclear fuel being arranged in a lower part of the reactor vessel underneath the inner structure The nuclear reactor also comprises at least one heat exchanger for transferring heat from the low-pressure primary coolant to a higher-pressure secondary coolant, wherein the secondary coolant preferably has a lower density than the primary coolant.. Upon operation of the nuclear reactor, the primary coolant moves upwards through the up-flow coolant passage to an upper part of the reactor vessel and then downwards through the down-flow coolant passage back to the lower part of the reactor vessel According to an important aspect of the invention, the at least one heat exchanger is arranged in the up-flow coolant passage Also, the at least one heat exchanger is arranged diagonally above the core and laterally to an above-core structure, the latter being arranged vertically above the core.

By placing the heat exchanger in the up-flow coolant passage, the risk of a leakage in itself is not reduced However, the problems associated therewith are eliminated. The leaked secondary coolant will generally form bubbles in the primary coolant or interact with the latter to form slag. The bubbles together with or without slag flows upwards due to the lower density of the secondary coolant with respect to the primary coolant. Furthermore, the flow of primary coolant is such that the bubbles and/or slag is dragged in a direction away from the core. Any bubbles and/or slag will hence move upwards to a free coolant surface and the gas plenum thereabove, wherefrom they can be removed. It will be appreciated that, because of the above, the present nuclear reactor is inherently safe, when compared to prior art nuclear reactors. Also, by placing the heat exchanger in the up-flow coolant passage, heat is removed from the primary coolant before it reaches the walls of the reactor vessel. The upper part of the reactor vessel is considerably cooler during normal operation and also during accident events, except in Loss-of-Heat-Sink accidents. The temperature gradient in the reactor vessel is smaller and thermal stress in the reactor vessel is thereby minimised. Furthermore, by not arranging the heat exchangers in the down-flow coolant passage, the latter can be made narrower, which may result in a more compact overall design.

Preferably, the nuclear reactor further comprises at least one non-return valve arranged in the up-flow coolant passage downstream of the core and upstream of the heat exchanger. Such a non-return valve prevents a back-flow of primary coolant from the heat exchanger to the core through the up-flow coolant passage. It is thereby ensured that any leak from the heat exchanger flows to the upper portion of the reactor vessel before reaching the core. Any secondary coolant leaked into the primary coolant can then be removed from the primary coolant, generally in the gas plenum, before reaching the core.

Advantageously, the non-return valve comprises a passive flap. Such preferably totally passive flaps can be maintained in the open position by the momentum of flow of the primary coolant through the up-flow coolant passage. No separate actuator is hence needed to operate the non-return valve. In case of a flow reversal, or a pressure burst above the flap, due to a more substantial leak in the heat exchanger, the flap is brought into the closed position, thereby preventing back-flow of coolant from the heat exchanger down to the core through the up-flow coolant passage. Due to the passive flap, the down-flow of coolant in the up-flow coolant passage is automatically prevented.

According to a preferred embodiment of the invention, the nuclear reactor further comprises a grid arranged in the upper part of the reactor vessel at the entrance to the down-flow coolant passage. Such a grid is preferably arranged and dimensioned so as to prevent larger pieces of slag to reach the down-flow coolant passage. Preferably, the grid openings should have a cross-section between 2.5 mm and 10 mm, i.e. smaller that the distance between adjacent fuel pins. It will be appreciated that such a grid is of particular advantage in case of water/steam being used as secondary coolant. Indeed water/steam leaking into the primary coolant can interact with the Pb or Pb/Bi of the primary coolant and form PbO and/or BiO slag, which could lead to obstructions in the fuel bundles of the core if allowed to reach the latter.

According to another preferred embodiment of the invention, the nuclear reactor further comprises a comb-like stripper element in the upper part of the reactor vessel at the entrance to the down-flow coolant passage. Such a stripper element is preferably arranged and dimensioned so as to direct gas bubbles, vapour bubbles and/or slag in the primary coolant to the gas plenum. The stripper element preferably has teeth reaching above the free coolant level in order to guide the bubbles and/or slag into the gas plenum. Furthermore, the stripper element preferably has its teeth tilted, advantageously between 30° and 75°, with respect to the down-flow coolant passage in order to direct the bubbles and/or slag upwards towards the gas plenum. Furthermore, the distance between the teeth should preferably be between 2.5 mm and 10 mm, i.e. smaller that the distance between adjacent fuel pins. Such a stripper element can e.g. be of advantage in a sodium cooled reactor or a molten salt reactor wherein an inert gas is used as secondary coolant. In case of a leak in the heat exchanger, the leaked gas forms bubbles in the primary coolant. The stripper element ensures that such bubbles are deviated into the gas plenum where they can subsequently be removed from the reactor vessel. Such a stripper element can also be of advantage in Pb or Pb/Bi cooled reactors wherein water/steam is used as secondary coolant. The vapour bubbles, as well as PbO or BiO slag formed by the leaked water/steam interacting with the primary coolant, can also be directed to the gas plenum by the stripper element. The stripper element hence helps to clean the primary coolant before it is redirected down to the core via the down-flow coolant passage.

At least one pump can be arranged in the down-flow coolant passage and/or in the up-flow coolant passage. Such a pump, e.g. a jet pump, allows improving the circulation of the primary coolant in the reactor vessel. Instead of its use in a pump-driven reactor, the present invention can also be implemented in a reactor in which the coolant circulates by natural circulation driven by the operation of the core of nuclear fuel and the colder heat exchangers which are located higher up. Such reactors can of course also be complemented by one or more pumps.

Preferably, the primary coolant comprises liquid metal, such as e.g. lead, lead bismuth, mercury, sodium, sodium-potassium or molten salt.

The secondary coolant can e.g. comprise water/steam, carbon dioxide, helium or nitrogen.

The inner structure can comprise an above-core structure, wherein the up-flow coolant passage is arranged around the above-core structure. The above-core structure allows easier access to the core of the nuclear reactor, in particular for exchanging fuel rods. In case of accelerator driven systems, the above-core structure also includes a beam pipe of an accelerated particle beam directed onto a nuclear fuel target.

The up-flow coolant passage can be divided into a plurality of risers, each of the risers comprising a heat exchanger therein. A separate non-return valve is then preferably arranged in each of the plurality of risers. In case of a major leak in one of the heat exchangers, the non-return valve arranged in the riser containing the leaking heat exchanger is closed automatically. The primary coolant is then redirected through the risers that are still available.

The heat exchangers can have circular or kidney-shaped cross-section. Circular heat exchangers are generally easier to manufacture, whereas kidney-shaped heat exchangers generally make a better use of the cross-section of an annular coolant up-flow passage.

The down-flow coolant passage can be divided into a plurality of downcomers.

### Brief description of the drawings

The present invention will be more apparent from the following description of a not limiting embodiment with reference to the attached drawings, wherein:
- Fig.1:: is a schematic vertical cross-section through a nuclear reactor according to the invention;
- Fig.2:: is a cut through the nuclear reactor fig 1 along line A-A;
- Fig.3:: is a schematic top view of the grid of Fig.1; and
- Fig.4:: is a schematic cross-section of the stripper element of Fig.1.

### Detailed description of a preferred embodiment

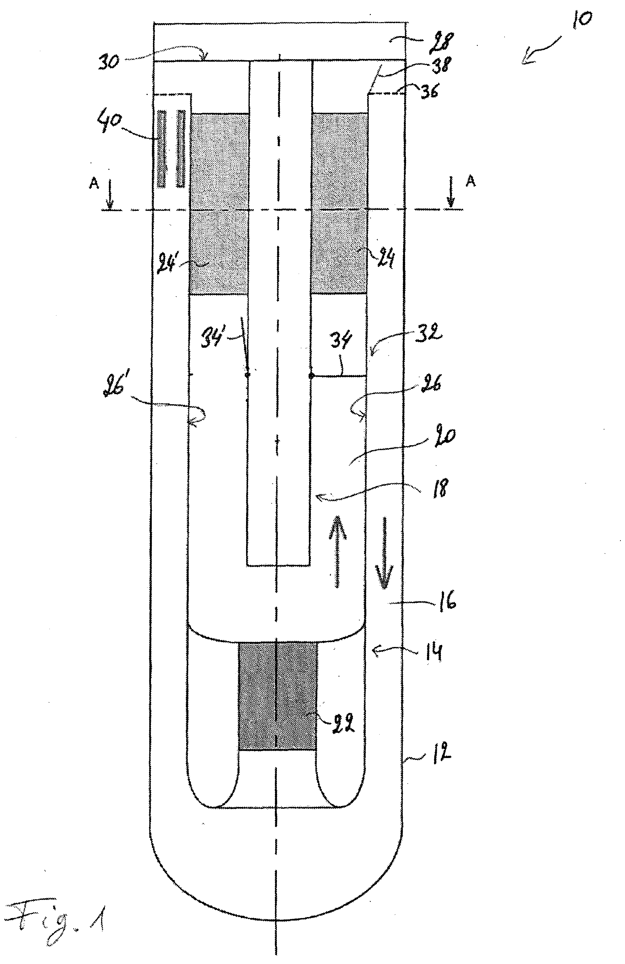

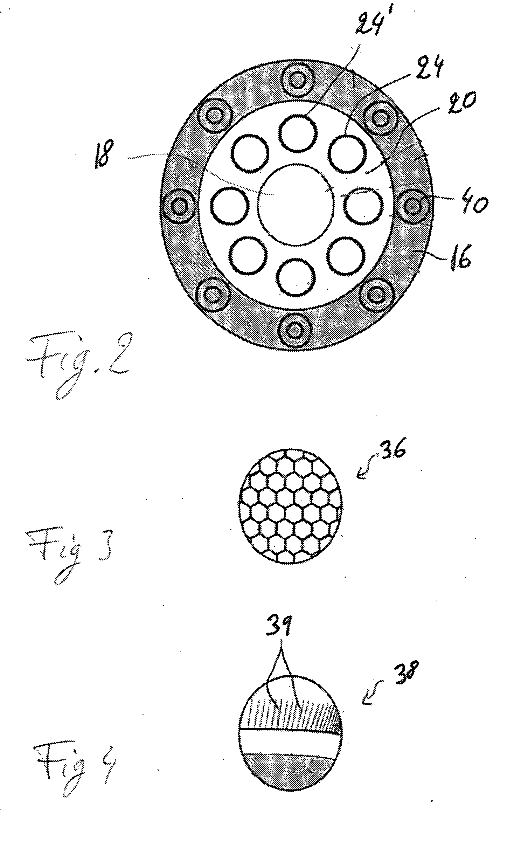

Fig. 1 and Fig.2 schematically show a preferred embodiment of a nuclear reactor in accordance with the present invention, wherein Fig.2 is a cut through the nuclear reactor of Fig.1 along line A-A. The nuclear reactor 10 comprises a cylindrical reactor vessel 12, and a generally cylindrical inner structure 14 coaxially arranged within the reactor vessel 12, thereby defining a ring shaped down-flow coolant passage 16 between the reactor vessel 12 and the inner structure 14. The inner structure 14 comprises a generally cylindrical above-core structure 18 coaxially arranged within the inner structure 14, thereby defining a ring shaped up-flow coolant passage 20 between the inner structure 14 and the above-core structure 18. In a lower portion of the reactor vessel 12, the down-flow coolant passage 16 is in fluid communication with the up-flow coolant passage 20 and in an upper portion of the reactor vessel 12, the up-flow coolant passage 20 is in fluid communication with the down-flow coolant passage 16, thereby defining a primary circuit wherein a primary coolant such as liquid metal or molten salt can circulate. In the lower portion of the reactor vessel 12, below the above-core structure 18, a core 22 of nuclear fuel is arranged. Upon operation of the nuclear reactor 10, the core 22 heats up the primary coolant flowing therethrough.

According to an important aspect of the invention, at least one heat exchanger 24 is arranged in the up-flow coolant passage 16 to transfer heat from the primary coolant to a secondary coolant such as water/steam, CO₂, He or N₂ flowing in a secondary circuit (not shown).

Different combinations of primary and secondary coolants are listed in Table 1. It should be noted that this list is not exhaustive.

**Table 1**

| PRIMARY COOLANT | SECONDARY COOLANT |
|---|---|
| Pb | Steam |
| Pb | CO₂ |
| Pb | N₂ |
| Pb | He |
| Pb/Bi | Steam |
| Pb/Bi | N₂ |
| Pb/Bi | CO₂ |
| Na | N₂ |
| Na | CO₂ |
| Molten Salt | CO₂ |
| Molten Salt | He |
| Molten Salt | N₂ |
| Hg | Steam |

Generally, the up-flow coolant passage 20 is divided into a plurality of regularly spaced risers 26, 26', two of which are shown in Fig.1. A heat exchanger 24, 24' is arranged in each of the risers 26, 26', in an upper portion thereof. In case of a leak in one of the heat exchangers 24, 24', the leaked secondary coolant flows into the primary circuit and mixes with the primary coolant. In the case of water/steam being used as secondary coolant, the leaked water/steam forms vapour bubbles in the primary coolant it can interact therewith and form oxide slag, e.g. PbO, BiO. In the case of CO₂, He or N₂ being used as secondary coolant, the leaked CO₂, He or N₂ can form bubbles in the primary coolant. Due to the lower density of the secondary gas coolant, the bubbles generally move upwards towards the upper portion of the reactor vessel 12. The bubbles and/or slag can however also be dragged along by the flow of the primary coolant. By placing the heat exchanger 24, 24' in the risers 26, 26', the bubbles and/or slag can only be dragged by the primary coolant in an upwards direction towards the upper portion of the reactor vessel 12. This ensures that any secondary coolant leaking from the heat exchanger 24, 24' will always move to the upper portion of the reactor vessel 12 before the primary coolant reaches the core 22.

In the upper portion of the reactor vessel 12, the bubbles can escape into a gas plenum 28 above the free surface 30 of the primary coolant. The slag will flow to the top of the primary coolant and float on the free surface 30. The bubbles and slag can be removed from the gas plenum 28 and free surface 30 by known devices. It follows that the primary coolant flowing down the down-flow coolant passage 16 to the lower part of the reactor vessel 12 and ultimately to the core 22 is substantially free of bubbles and slag. The problems of uncontrolled increase in reactivity and clogging of the inlet to the core, associated with bubbles and slag reaching the core, are thereby eliminated and the system is inherently safe - see also the following three paragraphs.

For further protection, the individual risers 26, 26' are each equipped with a non-return valve 32, preferably in the form of a passive flap 34, 34', between the core 22 and the heat exchangers 24, 24'. During normal operation of the nuclear reactor 10, the passive flaps 34, 34' are maintained in an open position due to the flow momentum of the primary coolant through the risers 26, 26'. In case of a major leak in one of the heat exchangers 24, 24', there is a pressure increase in the heat exchanger 24, 24' and there is a risk that the flow of primary coolant through the risers 26, 26' associated with the leaking heat exchangers 24, 24' is reversed. In order to prevent this, the passive flaps 34, 34' are automatically brought into their closed position thereby avoiding the back-flow of primary coolant. In Fig.1, the flap 34 is shown in the closed position, whereas the flap 34' is shown in its open position.

A grid 36, arranged at the top end of the down-flow coolant passage 16 prevents larger pieces of slag from entering the down-flow coolant passage 16 and ultimately reaching the core 22. Such a grid can e.g. have a honeycomb structure as shown in Fig.3.

Furthermore, a comb-like stripper element 38, as shown in Fig.4, can be arranged in the top portion of the reactor vessel 12, between the up-flow and down-flow coolant passages 20, 16. Such a stripper element 38 comprises a plurality of teeth 39, which are tilted at an angle between 30° and 75° with respect to the down-flow coolant passage 16. Furthermore, the teeth 39 of the stripper element 38 are long enough so as to extend into the gas plenum 28. The tilted teeth 39 of the stripper element 38 enhance the upward motion of the bubbles and slag towards the free surface 30 of the primary coolant and the gas plenum 28, thereby avoiding that they be dragged into the down-flow coolant passage 16 and ultimately to the core 22.

The flow of primary coolant through the primary circuit can be further controlled by a pump 40, e.g. an electromagnetic pump or a jet pump, positioned as shown in Fig.1 in the upper portion of the down-flow coolant passage 16. It will however be understood that the pump 40 can be arranged anywhere in the down-flow coolant passage 16 or in the up-flow coolant passage 20 between the core 22 and the heat exchangers 24, 24'. Such a pump 40 allows the cooling of a core 22 of higher power.

The risers 26, 26' and the heat exchangers 24, 24' arranged therein can have a circular cross-section, as shown in Fig.2, or a kidney-shaped cross-section.

Although not shown in the figures, the down-flow coolant passage 16 can be divided into a plurality of regularly spaced downcomers.

As an example for the functionality and the safety characteristics of the present embodiment, calculations were performed with the computational fluid dynamics code STAR-CD for an 800 MW thermal Accelerator-Driven System (ADS). Even though natural circulation is preferable we have chosen to complement this design with pumps in order to show that it is feasible to cool a higher power core. A jet pump is proposed to be positioned either in the up-flow coolant passage below the heat exchangers or in the down-flow coolant passage. Apart from normal operation, a loss of flow, a loss of heat sink and a total loss of power accident were investigated for ADSs of three different heights (11 m, 14 m, and 17 m),

All accident calculations for a pump-driven ADS show an acceptable temperature evolution at the core outlet and the reactor vessel wall. Simulations were performed for three different reactor heights (11 m, 14 m, 17 m). During Loss-of-Flow accidents, the core outlet temperature stabilises at 1097 K, 995 K and 905 K for the 11 m, 14 m and 17 m design, respectively. The difference is due to the improved natural circulation for a taller design. For a Loss-of-Heat-Sink accident, the core outlet temperature reaches 1490 K, 1270 K, and 1150 K respectively, after about six minutes (in an ADS at full power). Here, the difference is both due to the improved natural circulation and the larger heat capacity of a taller design. During a Total-Loss-of-Power accident, the core outlet temperature peaks at 905 K, 835 K and 815 K, respectively. As before, the decreased temperature for taller designs is due to better natural circulation and larger heat capacity of the coolant. From the Loss-of-Flow calculations it can be seen that the natural circulation capability of the proposed design is very good.

Steady-state calculations were also performed for a critical reactor or ADS without pump for both 400 MW on an 11 m and 17 m tall design and for 600 MW in a 17 m design. The results show outlet temperatures of 812 K, 731 K and 832 K, respectively. This shows that designs that rely on natural circulation cooling are possible with our new design option.

Furthermore, it should be indicated that none of the results showed a reverse flow pattern, thus the flaps should stay open, as there is no steam or gas leakage. The functionality of this approach appears assured.

## Claims

1. Low-pressure nuclear reactor (10), in particular liquid metal-cooled reactor or molten salt reactor, comprising:
a reactor vessel (12) and an inner structure (14) arranged therein, said reactor vessel (12) being at least partially filled with a low-pressure first coolant, said inner structure (14) having an up-flow coolant passage (20) therethrough and being dimensioned and arranged so as to provide a down-flow coolant passage (16) between said reactor vessel (12) and said inner structure (14);
a core of nuclear fuel being arranged in a lower part of said reactor vessel (12) underneath said inner structure (14); and
at least one heat exchanger (24, 24') for transferring heat from said low-pressure primary coolant to a higher-pressure secondary coolant,
wherein, upon operation of said nuclear reactor (10), said primary coolant moves upwards through said up-flow coolant passage (20) to an upper part of said reactor vessel (12) and then downwards through said down-flow coolant passage (16) back to said lower part of said reactor vessel (12),
said at least one heat exchanger (24, 24') is arranged in said up-flow coolant passage (20)
**characterised in that**
said at least one heat exchanger (24, 24') is arranged diagonally above said core and laterally to an above-core structure, said above-core structure being arranged vertically above said core

2. Nuclear reactor (10) according to claim 1, further comprising at least one non-return valve (32) arranged in said up-flow coolant passage (20) downstream of said core and upstream of said heat exchanger (24, 24')

3. Nuclear reactor (10) according to claim 2, wherein said non-return valve (32) comprises a passive flap (34, 34').

4. Nuclear reactor (10) according to any of the previous claims, further comprising a grid (36) arranged in said upper part of said reactor vessel (12) at the entrance to said down-flow coolant passage (16)

5. Nuclear reactor (10) according to any of the previous claims, further comprising a comb-like stripper element (38) in said upper part of said reactor vessel (12) at the entrance to said down-flow coolant passage (16).

6. Nuclear reactor (10) according to claim 5, wherein said comb-like stripper element (38) comprises teeth (39), which are tilted, preferably between 30° and 75°, with respect to said down-flow coolant passage (16).

7. Nuclear reactor (10) according to any of the previous claims, wherein at least one pump (40) is arranged in said down-flow coolant passage (16) and/or in said up-flow coolant passage (20).

8. Nuclear reactor (10) according to any of the previous claims, wherein said primary coolant comprises liquid metal and/or molten salt.

9. Nuclear reactor (10) according to claim 8, wherein said liquid metal is chosen in the group comprising lead, lead bismuth, sodium, sodium-potassium and mercury.

10. Nuclear reactor (10) according to any of the previous claims, wherein said secondary coolant comprises water/steam, carbon dioxide, helium or nitrogen.

11. Nuclear reactor (10) according to any of the previous claims, wherein said inner structure (14) comprises an above-core structure (18), wherein said up-flow coolant passage (20) is arranged around said above-core structure (18).

12. Nuclear reactor (10) according to any of the previous claims, wherein said up-flow coolant passage (20) is divided into a plurality of risers (26, 26'), each of said rises comprising a heat exchanger (24, 24') therein.

13. Nuclear reactor (10) according to claim 2 and claim 12, wherein each of said plurality of risers (26, 26') comprises a separate non-return valve (32).

14. Nuclear reactor (10) according to any of claims 12 to 13, wherein said risers (26, 26') have circular or kidney-shaped cross-section.

15. Nuclear reactor (10) according to any of the previous claims, wherein said down-flow coolant passage (16) is divided into a plurality of downcorners.

## Patentansprüche

1. Niederdruck-Kernreaktor (10), insbesondere flüssigmetallgekühlter Reaktor oder Salzschmelzenreaktor, umfassend:
einen Reaktorbehälter (12) und eine darin angeordnete Innenstruktur (14), wobei der Reaktorbehälter (12) zumindest teilweise mit einem ersten Niederdruck-Kühlmittel befüllt ist, wobei die Innenstruktur (14) einen aufwärts durchströmten Kühlmittelkanal (20) **dadurch** aufweist und derart bemessen und angeordnet ist, dass sie einen abwärts durchströmten Kühlmittelkanal (16) zwischen dem Reaktorbehälter (12) und der Innenstruktur (14) bildet;
einen Kernbrennstoffkern, der in einem unteren Teil des Reaktorbehälters (12) unter der Innenstruktur (14) angeordnet ist; und
mindestens einen Wärmetauscher (24, 24') zur Übertragung von Wärme vom Niederdruck-Primärkühlmittel zu einem Sekundärkühlmittel mit höherem Druck,
wobei bei Betrieb des Kernreaktors (10) das Primärkühlmittel sich aufwärts durch den aufwärts durchströmten Kühlmittelkanal (20) zu einem oberen Teil des Reaktorbehälters (12) und dann abwärts durch den abwärts durchströmten Kühlmittelkanal (16) zurück zum unteren Teil des Reaktorbehälters (12) bewegt,
wobei der mindestens eine Wärmetauscher (24, 24') im aufwärts durchströmten Kühlmittelkanal (20) angeordnet ist,
**dadurch gekennzeichnet, dass**
der mindestens eine Wärmetauscher (24, 24') diagonal über dem Kern und seitlich einer Über-Kern-Struktur angeordnet ist, wobei die Über-Kern-Struktur vertikal über dem Kern angeordnet ist

2. Kernreaktor (10) nach Anspruch 1, ferner umfassend mindestens ein Rückschlagventil (32), das im aufwärts durchströmten Kühlmittelkanal (20) stromabwärts des Kerns und stromaufwärts des Wärmetauschers (24, 24') angeordnet ist.

3. Kernreaktor (10) nach Anspruch 2, wobei das Rückschlagventil (32) eine Passivklappe (34, 34') umfasst.

4. Kernreaktor (10) nach irgendeinem der vorangehenden Ansprüche, ferner umfassend ein Gitter (36), das im oberen Teil des Reaktorbehälters (12) am Einlass zum abwärts durchströmten Kühlmittelkanal (16) angeordnet ist

5. Kernreaktor (10) nach irgendeinem der vorangehenden Ansprüche, ferner umfassend ein kammartiges Abstreifelement (38) im oberen Teil des Reaktorbehälters (12) am Einlass zum abwärts durchströmten Kühlmittelkanal (16)

6. Kernreaktor (10) nach Anspruch 5, wobei das kammartige Abstreifelement (38) Zähne (39) umfasst, die vorzugsweise zwischen 30° und 75° bezogen auf den abwärts durchströmten Kühlmittelkanal (16) geneigt sind

7. Kernreaktor (10) nach irgendeinem der vorangehenden Ansprüche, wobei mindestens eine Pumpe (40) im abwärts durchströmten Kühlmittelkanal (16) und/oder im aufwärts durchströmten Kühlmittelkanal (20) angeordnet ist

8. Kernreaktor (10) nach irgendeinem der vorangehenden Ansprüche, wobei das Primärkühlmittel flüssiges Metall und/oder geschmolzenes Salz umfasst.

9. Kernreaktor (10) nach Anspruch 8, wobei das flüssige Metall aus der Gruppe umfassend Blei, Blei-Wismut, Natrium, Natrium-Kalium und Quecksilber ausgewählt ist

10. Kernreaktor (10) nach irgendeinem der vorangehenden Ansprüche, wobei das Sekundärkühlmittel Wasser/Dampf, Kohlendioxid, Helium oder Stickstoff umfasst.

11. Kernreaktor (10) nach irgendeinem der vorangehenden Ansprüche, wobei die Innenstruktur (14) eine Über-Kern-Struktur (18) umfasst, wobei der aufwärts durchströmte Kühlmittelkanal (20) rings um die Über-Kern-Struktur (18) angeordnet ist

12. Kernreaktor (10) nach irgendeinem der vorangehenden Ansprüche, wobei der aufwärts durchströmte Kühlmittelkanal (20) in mehrere Steigrohre (26, 26') unterteilt ist, wobei jedes der Steigrohre einen Wärmetauscher (24, 24') darin umfasst

13. Kernreaktor (10) nach Anspruch 2 und Anspruch 12, wobei jedes der mehreren Steigrohre (26, 26') ein separtes Rückschlagventil (32) umfasst.

14. Kernreaktor (10) nach irgendeinem der Ansprüche 12 bis 13, wobei die Steigrohre (26, 26') einen kreis- oder nierenförmigen Querschnitt aufweisen

15. Kernreaktor (10) nach irgendeinem der vorangehenden Ansprüche, wobei der abwärts durchströmte Kühlmittelkanal (16) in mehrere Fallrohre unterteilt ist.

## Revendications

1. Réacteur nucléaire (10) basse pression, en particulier réacteur à refroidissement par métal liquide ou réacteur aux sels fondus, comprenant :
une cuve de réacteur (12) et une structure interne (14) agencée dans celle-ci, ladite cuve de réacteur (12) étant au moins partiellement remplie avec un premier caloporteur basse pression, ladite structure interne (14) ayant un passage de caloporteur en écoulement montant (20) à travers celle-ci et étant dimensionnée et agencée de manière à créer un passage de caloporteur en écoulement descendant (16) entre ladite cuve de réacteur (12) et ladite structure interne (14) ;
un coeur de combustible nucléaire étant agencé dans une partie inférieure de ladite cuve de réacteur (12) en-dessous de ladite structure interne (14) ; et
au moins un échangeur de chaleur (24, 24') pour transférer une chaleur dudit caloporteur primaire basse pression jusqu'à un caloporteur secondaire de pression plus élevée,
dans lequel, lors du fonctionnement du réacteur nucléaire (10), ledit caloporteur primaire se déplace vers le haut à travers ledit passage de caloporteur en écoulement montant (20) jusqu'à une partie supérieure de ladite cuve de réacteur (12) et ensuite vers le bas à travers ledit passage de caloporteur en écoulement descendant (16) en retour jusqu'à ladite partie inférieure de ladite cuve de réacteur (12),
ledit au moins un échangeur de chaleur (24, 24') est agencé dans ledit passage de caloporteur en écoulement montant (20)
**caractérisé en ce que**
ledit au moins un échangeur de chaleur (24, 24') est agencé diagonalement au-dessus dudit coeur et latéralement à une structure au-dessus du coeur, ladite structure au-dessus du coeur étant agencée verticalement au-dessus dudit coeur.

2. Réacteur nucléaire (10) selon la revendication 1, comprenant en outre au moins un clapet anti-retour (32) agencé dans ledit passage de caloporteur en écoulement montant (20) en aval dudit coeur et en amont dudit échangeur de chaleur (24, 24')

3. Réacteur nucléaire (10) selon la revendication 2, dans lequel ledit clapet anti-retour (32) comprend un volet passif (34, 34')

4. Réacteur nucléaire (10) selon l'une quelconque des revendications précédentes, comprenant en outre une grille (36) agencée dans ladite partie supérieure de ladite cuve de réacteur (12) à l'entrée dudit passage de caloporteur en écoulement descendant (16)

5. Réacteur nucléaire (10) selon l'une quelconque des revendications précédentes, comprenant en outre un élément d'épuisement (38) en forme de peigne dans ladite partie supérieure de ladite cuve de réacteur (12) à l'entrée dudit passage de caloporteur en écoulement descendant (16)

6. Réacteur nucléaire (10) selon la revendication 5, dans lequel ledit élément d'épuisement (38) en forme de peigne comprend des dents (39), qui sont inclinées, préférablement entre 30° et 75°, par rapport audit passage de caloporteur en écoulement descendant (16)

7. Réacteur nucléaire (10) selon l'une quelconque des revendications précédentes, dans lequel au moins une pompe (40) est agencée dans ledit passage de caloporteur en écoulement descendant (16) et/ou dans ledit passage de caloporteur en écoulement montant (20).

8. Réacteur nucléaire (10) selon l'une quelconque des revendications précédentes, dans lequel ledit caloporteur primaire comprend un métal liquide et/ou un sel fondu

9. Réacteur nucléaire (10) selon la revendication 8, dans lequel ledit métal liquide est choisi dans le groupe comprenant le plomb, le plomb-bismuth, le sodium, le sodium-potassium et le mercure

10. Réacteur nucléaire (10) selon l'une quelconque des revendications précédentes, dans lequel ledit caloporteur secondaire comprend de l'eau/de la vapeur, du dioxyde de carbone, de l'hélium ou de l'azote

11. Réacteur nucléaire (10) selon l'une quelconque des revendications précédentes, dans lequel ladite structure interne (14) comprend une structure au-dessus du coeur (18), dans lequel ledit passage de caloporteur en écoulement montant (20) est agencé autour de ladite structure au-dessus du coeur (18)

12. Réacteur nucléaire (10) selon l'une quelconque des revendications précédentes, dans lequel ledit passage de caloporteur en écoulement montant (20) est divisé en une pluralité de colonnes montantes (26, 26'), chacune desdites colonnes montantes comprenant un échangeur de chaleur (24, 24') dans celle-ci

13. Réacteur nucléaire (10) selon la revendication 2 et la revendication 12, dans lequel chacune de ladite pluralité de colonnes montantes (26, 26') comprend un clapet anti-retour (32) séparé

14. Réacteur nucléaire (10) selon l'une quelconque des revendications 12 à 13, dans lequel lesdites colonnes montantes (26, 26') ont une section transversale circulaire ou en forme de haricot

15. Réacteur nucléaire (10) selon l'une quelconque des revendications précédentes, dans lequel ledit passage de caloporteur en écoulement descendant (16) est divisé en une pluralité de colonnes descendantes
